# EUROPEAN PATENT SPECIFICATION

(11) **EP 4 442 016 B1**
(45) Date of publication and mention of the grant of the patent: **04.02.2026**
(21) Application number: 21830633.0
(22) Date of filing: 03.12.2021
(51) Int. Cl.: H04L 69/28, H04L 67/12, H04W 4/70, G06F 1/3234, H04L 67/62, H04W 60/00

(54) **METHODS AND APPARATUS RELATING TO MACHINE-TO-MACHINE CONNECTIVITY INFORMATION SHARING**
VERFAHREN UND VORRICHTUNG IM ZUSAMMENHANG MIT GEMEINSAMER NUTZUNG VON MASCHINE-ZU-MASCHINE-KONNEKTIVITÄTSINFORMATIONEN
PROCÉDÉS ET APPAREIL LISIBLES PAR MACHINE SE RAPPORTANT À UN PARTAGE D'INFORMATIONS DE CONNECTIVITÉ MACHINE À MACHINE

(43) Date of publication of application: 09.10.2024
(73) Proprietor: Telefonaktiebolaget LM Ericsson (publ), 164 83 Stockholm (SE)
(72) Inventor: NOVO DIAZ, Oscar, 00180 Helsinki (FI)
(74) Representative: Ericsson
(86) International application number: PCT/EP2021/084286
(87) International publication number: WO 2023/099018

(56) References cited:
- US-A1- 2014 112 232
- US-A1- 2019 394 174

## Description

### Technical field

Embodiments of the present disclosure relate to machine-to-machine (M2M) communication, and particularly to methods, apparatus, and machine-readable media for sharing connectivity information of M2M devices.

### Background

The "Internet of Things" (IoT) refers to systems of devices enabled for communication network connectivity, so that these devices may be remotely managed, and their data may be exchanged between individual devices and between devices and application servers. A popular vision of loT comprises large numbers of such small autonomous devices, transmitting and receiving small amounts of data, typically relatively infrequently. IoT devices, examples of which may include sensors and actuators, are often although not necessarily, subject to severe limitations on processing power, storage capacity, energy supply, device complexity and/or network connectivity, imposed by their operating environment or situation, and may consequently be referred to as constrained devices. Constrained devices may operate according to a range of protocols, including widely used communication protocols such as Internet Protocol (IP) v4 or IPv6, and dedicated protocols for constrained devices, including for example the Constrained Application Protocol (CoAP).

Lightweight Machine-to-Machine (LwM2M) is an application layer protocol designed to provide for machine-to-machine or Internet of Things (IoT) device management and service enablement. LwM2M is designed to expose various resources for reading, writing, and executing via a LwM2M server. In short, LwM2M is designed to manage end-devices in a lightweight environment. The protocol was originally built on Constrained Application Protocol (CoAP), which mainly uses User Datagram Protocol (UDP) as its transport layer protocol. However, later versions of LwM2M support additional transfer protocols.

The LwM2M specification (available at the filing date from https://technical.openmobilealliance.org/index.html) provides a registration interface between a LwM2M client and a LwM2M server. A LwM2M client transmits a registration message to a LwM2M server. The registration message may comprise an indication of the objects supported by the LwM2M client. The LwM2M server registers the client (e.g., records registration settings, the objects supported by the LwM2M client, etc.), and transmits an acknowledgement.

The LwM2M specification is designed to be lightweight in all respects, and thus aims to reduce the management burden on LwM2M servers as well as other tasks performed by LwM2M clients. The LwM2M client may thus be configured with a threshold time to control its registration with the LwM2M server. If the LwM2M client does not report to the LwM2M server with a register or update message for the threshold period of time, the registration is considered terminated. In this way, the number of clients registered with the LwM2M server can be kept low, and dormant LwM2M clients do not occupy resources at the LwM2M server.

The LwM2M specification also provides an interface for software/firmware updates. That interface includes steps of installing a software package, updating the software, and performing actions after updating the software.

The specification describes two methods: in the first method a LwM2M client fetches the software package from a LwM2M server using the Firmware Update object (identified by the object ID 5) and a resource structure; in the second method a LwM2M server instructs a LwM2M client to fetch a software package from a dedicated server (instead of pushing software packages to the LwM2M client). In both cases, the LwM2M client and LwM2M server are required to support the block-wise transfer feature of CoAP if they implement the Firmware Update object. For constrained devices, CoAP is recommended by the LwM2M standard to be used for software downloads.

Regarding the block-wise transfer, depending on the block size selected by the LwM2M server and the size of the overall software package to be transferred, the transfer of the software package is likely to require multiple separate transmissions. That is, each transmission contains one block, and if the size of the software package is greater than that block size, more than one transmission will be required. Typically, as the devices implementing a LwM2M client are very constrained (e.g., with very limited processing power, memory size, communication capabilities, etc.), transfer of a software package may require hundreds of transmissions. For example, where the block size is 128 bytes and the software package is 80 kB (81,920 bytes), 640 messages will be required, each carrying a 128-byte payload (assuming no messages are lost). The transfer of the software package proceeds until transfer is complete.

LwM2M devices implementing LwM2M clients typically have limited battery lifetime and will often implement multiple connection modes or states in order to reduce energy consumption. For example, a LwM2M device may implement a first, active connection mode and a second, inactive or sleep connection mode. In the first mode, the LwM2M device may be available for communication with the LwM2M server, e.g., communication circuitry and/or software is activated and the LwM2M device is capable of transmitting messages to or receiving messages from the LwM2M server. In the second mode, the LwM2M device may be unavailable for communication with the LwM2M server, e.g., communication circuitry and/or software is deactivated and the LwM2M device is not capable of transmitting messages to or receiving messages from the LwM2M server. The second mode is associated with lower energy usage, and thus its use extends the effective battery lifetime of the LwM2M device. The second mode is also referred to as a "sleep state", an "idle state", "offline state" or an "inactive state" herein.

US 2019/394174 A1 discloses a method for performing a Transport Layer Security (TLS) / Datagram TLS (DTLS) handshake process between machines in a manner that reduces the amount of data sent during the handshake process.

US 2014/112232 A1 discloses a method providing application layer support for one or more sleeping nodes in constrained networks. Embodiments contemplate inserting sleep information in a header option or payload of an application layer message.

### Summary

Typically, when the LwM2M device is in the sleep state, the LwM2M client registration with the LwM2M server is lost. A further registration procedure is required before the LwM2M client can restart communication with the LwM2M server.

This has particular implications for the software update process described above, as this process does not take account of the different connection modes an IoT device can have. If an IoT device switches to an idle state while the LwM2M server is pushing a new software update (e.g., not all messages for the software package have been transmitted), that update will be lost. When the device re-registers with the LwM2M server at a later time, the software update process must begin again from the start. Efficient management of software updates is vital to achieving proper performance of IoT devices.

Embodiments of the disclosure seek to address these and other problems.

In a first aspect of the disclosure, a method performed by a lightweight machine-to-machine (LwM2M) server is provided. The method comprises: receiving, from a LwM2M client registered with the LwM2M server, an indication of a time period during which the LwM2M client will be in a sleep state in which one or more hardware or software components of a LwM2M device implementing the LwM2M client are deactivated. The method further comprises, for the duration of the time period: maintaining a registration of the LwM2M client with the LwM2M server; and refraining from transmitting to the LwM2M client.

Apparatus and computer-readable media for performing the method according to the first aspect are also provided. For example, in one aspect the disclosure provides a LwM2M server comprising processing circuitry and a non-transitory machine-readable medium. The medium stores instructions which, when executed by the processing circuitry, cause the LwM2M server to: receive, from a LwM2M client registered with the LwM2M server, an indication of a time period during which the LwM2M client will be in a sleep state in which one or more hardware or software components of a LwM2M device implementing the LwM2M client are deactivated. The instructions further cause the LwM2M server to, for the duration of the time period: maintain a registration of the LwM2M client with the LwM2M server; and refrain from transmitting to the LwM2M client.

In a second aspect of the disclosure, there is provided a method performed by a LwM2M device implementing a LwM2M client. The method comprises: transmitting, to a LwM2M server with which the LwM2M client is registered, an indication of a time period during which the LwM2M client will enter a sleep state in which one or more hardware or software components of the LwM2M device are deactivated. The method further comprises, after conclusion of the time period: transmitting a message to or receiving a message from the LwM2M server without first performing a registration operation with the LwM2M server.

Apparatus and computer-readable media for performing the method according to the second aspect are also provided. For example, in one aspect the disclosure provides a LwM2M device implementing a LwM2M client comprising processing circuitry configured to cause the LwM2M device to: transmit, to a LwM2M server with which the LwM2M client is registered, an indication of a time period during which the LwM2M client will enter a sleep state in which one or more hardware or software components of the LwM2M device are deactivated. The processing circuitry is further configured to cause the LwM2M device to, after conclusion of the time period: transmit a message to or receiving a message from the LwM2M server without first performing a registration operation with the LwM2M server.

### Brief description of the drawings

For a better understanding of examples of the present disclosure, and to show more clearly how the examples may be carried into effect, reference will now be made, by way of example only, to the following drawings in which:
Figure 1 shows a system according to embodiments of the disclosure;
Figure 2 is a sequence diagram for sharing connectivity information according to embodiments of the disclosure;
Figure 3 is a sequence diagram for sharing connectivity information according to embodiments of the disclosure, particularly where the LwM2M device enters a sleep state predictably;
Figure 4 is a sequence diagram for sharing connectivity information according to embodiments of the disclosure, particularly where the LwM2M device enters a sleep state unpredictably;
Figure 5 is a sequence diagram for transmitting a software package according to embodiments of the disclosure;
Figure 6 is a flowchart of a method in a LwM2M server according to embodiments of the disclosure;
Figure 7 is a flowchart of a method in a LwM2M device according to embodiments of the disclosure;
Figures 8 and 9 are schematic illustrations of apparatus according to embodiments of the disclosure.

### Detailed description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

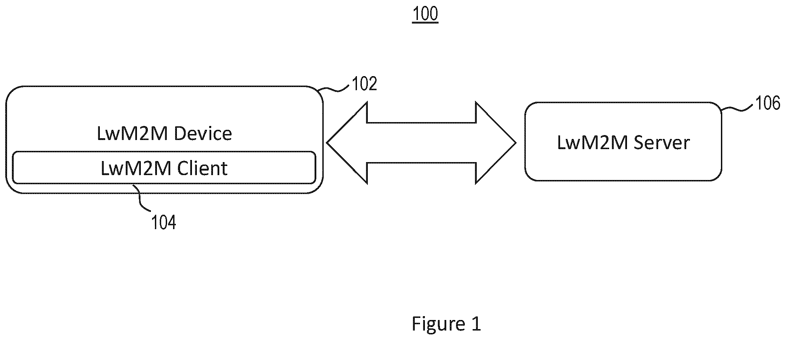

Figure 1 shows a system 100 according to embodiments of the disclosure, comprising a LwM2M device 102 and a LwM2M server 106. The LwM2M device 102 comprises a computing device that is operable to run a LwM2M client 104 and may be operable to run MQTT and/or a Constrained Application Protocol (CoAP) server. The LwM2M device 102 may comprise an loT device, and may be a constrained device.

A LwM2M client is a logical component running on a device implementing the client-side functionality of the LwM2M protocol for interacting with a LwM2M server and, although not discussed herein, a LwM2M Bootstrap-Server. A LwM2M device thus refers to a computing device or other computing architecture or physical computing entity that operates a LwM2M client or LwM2M server. A LwM2M server is a logical component implementing the server-side functionality of the LwM2M protocol for interacting with a LwM2M client. A LwM2M server component may be running on a physical server, communication network component or may be hosted on a cloud infrastructure. For the purposes of the present disclosure, a LwM2M server refers to the logical LwM2M server component and to the support on which it is running.

The terms LwM2M server/LwM2M server device, and LwM2M client/LwM2M client device, may be used interchangeably in the present specification. Where reference is made to actions performed by a LwM2M client or a LwM2M server, it will be understood that such actions are carried out by the logical LwM2M client or LwM2M server components being operated on the relevant devices. Where reference is made to actions performed by a LwM2M client device or a LwM2M server device, it will be understood that such actions may be carried out by the logical LwM2M client or LwM2M server running on the relevant device.

For the purposes of the present disclosure, the terms "sleep state" and "active state" may be understood in the context of the LwM2M specification. A sleep state refers to an operational mode in which at least some of the functionality of the device, including functionality enabling a LwM2M server to contact the device, is interrupted, disabled or deactivated in order to save computing or other resources in the LwM2M device. For example, one or more processes running in the LwM2M device might be halted, saving computational resource, and/or power supply to certain circuits may be interrupted to save battery power. Different levels of sleep mode may be envisaged, according to how much functionality of the LwM2M device is interrupted. For example, if a device is considered to have functionality relating to processing activities, network connectivity, and sensing or actuating activity, different levels of sleep mode may correspond to the suspension of network connectivity functionality only, suspension of sensing/actuation functionality and network connectivity, and/or interruption of all functionality other than a minimum required to ensure that the device re-enters an awake mode at an appropriate time. An active state may be understood as referring to operation when the LwM2M device is not in a sleep mode of operation, and consequently may be contacted by a LwM2M server.

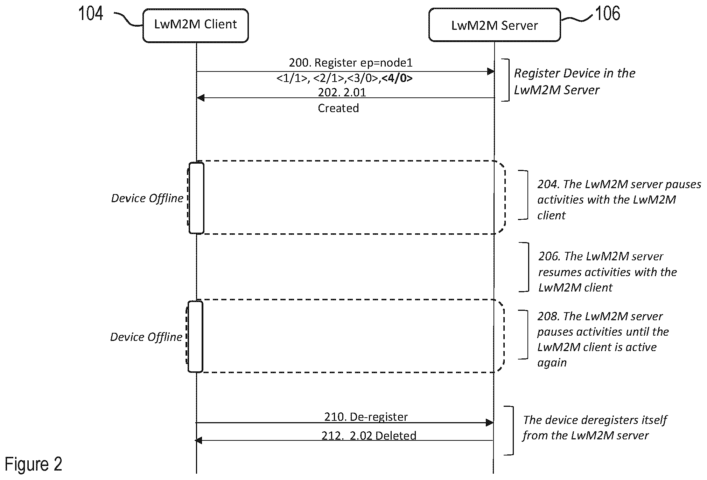

Figure 2 is a sequence diagram for sharing connectivity information according to embodiments of the disclosure. The sequence may involve a LwM2M client 104 and a LwM2M server 106 as described above with respect to Figure 1.

In a first series of steps, the LwM2M client 104 registers with the LwM2M server 106. Thus, in step 200, the LwM2M client 104 transmits a LwM2M Register message to the LwM2M server 106. The Register message may comprise indications of the LwM2M objects supported by the LwM2M client 104, such as the IDs of the relevant objects and the instances of each object. In the illustrated embodiment, the LwM2M client 104 supports object IDs 1, 2, 3 and 4, which correspond to the LwM2M Server, Access Control, Device, and Connectivity Monitoring objects respectively (as set out in the LwM2M specifications). Those skilled in the art will appreciate that the LwM2M client 104 may support different objects without departing from the scope of the claims appended hereto. The registration message may comprise one or more configuration parameters for the connection, such as a threshold period of time to be used by the LwM2M server 106 to keep its registration active; If this configuration parameter is not included in the registration message, the default time may be set to 86400 seconds in the LwM2M server 106.If the threshold period of registration time passes without the LwM2M client transmitting a Register or Update message to the LwM2M server 106, the registration may be considered terminated.

In step 202, the LwM2M server 106 registers the LwM2M client 104 (e.g., by recording identifying information for the client, establishing security parameters from its connection with the client, recording the objects supported by the client, etc) and transmits a confirmation message to the LwM2M client to confirm that it has been successfully registered.

According to embodiments of the disclosure, the LwM2M client 104 provides, to the LwM2M server 106, an indication of a time period in which the LwM2M client 104 will be in the sleep state. Various methods for providing this information are set out below according to whether the LwM2M client 104 enters the sleep state in a manner which is predictable to the LwM2M server 106 (e.g., according to some defined pattern or periodicity, in response to one or more known triggers, etc) or in a manner which is unpredictable to the LwM2M server 106 (e.g., in response to one or more triggers which are not known to the LwM2M server, etc).

In one embodiment, the LwM2M client 104 maintains a LwM2M object which includes the indication of the time period. The object is exposed to the LwM2M server 106, for example, through a process in which the LwM2M server 106 requests information contained in the object, and the LwM2M client 104 provides the requested information in response. The LwM2M object may correspond to one of the objects already defined in the LwM2M specification (with suitable additional parameters or resources), or may be a new object defined to contain the indication of the time period. In the former case, and in the illustrated embodiments herein, the object may correspond to the Connectivity Monitoring object (ID 4); however, those skilled in the art will appreciate that different objects may be utilized for this purpose.

In one embodiment, the LwM2M object contains additional parameters (known as resources in the LwM2M specification) as set out in Table 1 below. Table 1 is based on the Connectivity Monitoring object, with existing resources of that object omitted for brevity.

**Table 1: LwM2M object according to embodiments of the disclosure**

| **Object Name** | **Resource ID** | **Parameter** | **Description** |
|---|---|---|---|
| **Connectivity Monitoring (#4)** | 14 | Connectivity modes | Indicating if the loT device implements connectivity modes. |
| | 15 | Active counter | Active counter that indicates the time the loT device will remain activated. |
| | 16 | Is_Activated | Indicating when a device is active (is_activated=1) or inactive (is_activated=0) |
| | 17 | Active Hardware | Indicating which hardware is active while in sleep state |
| | 18 | Active Software | Indicating which software is active while in sleep state |
| | 19 | Connectivity pattern | Defining the pattern the loT device will follow to enter the sleep state |

The object may thus comprise an indication of whether or not the LwM2M client supports multiple connectivity modes, i.e., whether the LwM2M client supports one or more sleep states as well as an active state. This indication may be a Boolean indicating whether or not the LwM2M client supports multiple connectivity modes, for example. Alternatively, the indication may comprise the number of connectivity modes that are supported by the LwM2M client. In the embodiment shown in Table 1, this indication is contained in a new resource ID 14, "Connectivity modes". Note that, if this indication is negative or indicates that the LwM2M client does not support a sleep state, the remaining indications in Table 1 (which provide further detail regarding the sleep state of the LwM2M client) will be absent or contain null values.

The object may additionally or alternatively comprise an indication of an amount of time that the LwM2M client will remain in the active state before entering the sleep state. The amount of time may be indicated in any suitable units of time. This indication may correspond to a counter that is initiated at a defined amount of time when the LwM2M client enters the active state, and counts down to zero at which time the LwM2M client enters the sleep state. In the embodiment shown in Table 1, this indication is contained in a new resource ID 15, "Active counter".

The object may additionally or alternatively comprise an indication of whether the LwM2M client is in the active or sleep state. This indication may be a Boolean indicating whether the LwM2M client is in the active state (e.g., 1) or in the sleep state (e.g., 0). If the LwM2M client supports multiple sleep states, the indication may comprise an index associated with the current state of the LwM2M client; alternatively, the indication may be a Boolean in this case as well (e.g., 0 if the LwM2M client is in one of its sleep states). In the embodiment shown in Table 1, this indication is contained in a new resource ID 16, "Is_Activated". Note that the object is maintained at the LwM2M client, and thus this resource acts as an internal resource for the LwM2M client. When the LwM2M client is in the sleep state, it may be unable to report the current value of the indication as the communication circuitry and/or software of the LwM2M device may be deactivated. Nonetheless, the indications enable the LwM2M client to be configured within the LwM2M framework to perform one or more actions upon the value of this indication changing, e.g., upon the LwM2M client entering the active state.

The object may additionally or alternatively comprise an indication of which hardware and/or software of the LwM2M device is active while the LwM2M device is in the sleep state. In the embodiment of Table 1, the object contains separate indications of the hardware (e.g., resource ID 17, "Active Hardware") and the software (e.g., resource ID 18, "Active Software") which is active while the LwM2M device is in the sleep state. In particular, even though an IoT device may be in the sleep state, some of its hardware and software can still be running and can be managed by a LwM2M server. The *active hardware* and *active software* resources indicate which resources in the LwM2M device are still running in the sleep state. For instance, some of the sensors of a LwM2M device such as a smoke detector sensor could still be active while in the sleep state.

The object may additionally or alternatively comprise an indication of one or more conditions upon fulfilment of which the LwM2M client enters the sleep state. In particular, the conditions may relate to variables which are known to the LwM2M server, such that the LwM2M server, upon discovering the conditions recited in the object, is able to predict when the LwM2M client is in the sleep state or in the active state. For example, the conditions may comprise a temporal pattern according to which the LwM2M client enters the sleep state, i.e., a regular pattern according to which the LwM2M client enters the sleep state over time. The temporal pattern may be periodic, such that the LwM2M client enters the sleep state for a defined period of time on a regular cycle. In this case, the indication may comprise one or more of: an indication of a period of the pattern; an indication of the duration of the time that the LwM2M client will be in the sleep state; and an indication of a time at which the pattern starts. The conditions may additionally or alternatively define one or more events that cause the LwM2M client to enter the sleep state. The events may relate to the physical environment of the LwM2M client or the system in which the LwM2M client is present. In this regard, the LwM2M client may be configured to enter the sleep state upon some change in the physical environment which affects the operation of the LwM2M client. For example, the LwM2M device may comprise a sensor configured to sense a parameter of the physical environment, with those measurements becoming invalid upon a change in the physical environment, e.g., upon a fire alarm being activated, or upon a window being opened. In the embodiment shown in Table 1, this indication is contained in a new resource ID 19, "Connectivity Pattern".

This indication is thus useful for the LwM2M server to be able to predict when the LwM2M client will be in the sleep state. Nonetheless, the LwM2M client may enter the sleep state unpredictably, e.g., prompted by some cause or event which is unknown to the LwM2M server. In this case, interrogation of the "Active Counter" resource will enable the LwM2M server to determine when the LwM2M client is going to enter the sleep state, while the "Is_Activated" resource may be used to configure the LwM2M client to notify the LwM2M server once it returns to the active state.

Returning to Figure 2, it can be seen that the LwM2M client enters the sleep state (called "Device offline" in the Figure). This may be predictable, in that the LwM2M server has knowledge of the conditions which caused the LwM2M client 104 to enter the sleep state; or unpredictable, in that the LwM2M server does not have knowledge of the conditions which caused the LwM2M client to enter the sleep state. In either case, however, the LwM2M server 106 is previously informed (e.g., through interrogation of the object maintained by the LwM2M client) of the LwM2M client's entry to the sleep state. In step 204, and according to embodiments of the disclosure, the LwM2M server 106 maintains the registration of the LwM2M client 104 while the LwM2M client is in the sleep state. The LwM2M server 106 also pauses activities with the LwM2M client. For example, the LwM2M server may refrain from transmitting to the LwM2M client 104 while the client is in the sleep state.

In step 206, once the LwM2M client 104 enters the active state, the LwM2M server 106 may resume the activities which were paused in step 204. For example, the LwM2M server may once again transmit to the LwM2M client. Note that, because the registration of the LwM2M client 104 is maintained the LwM2M server 106, no further registration procedure is required for those activities to recommence.

In step 208, the LwM2M client 104 again enters the sleep state and the LwM2M server 106 again pauses activities with the client (similar to step 204). The registration of the LwM2M client with the LwM2M server is maintained.

In the illustrated embodiment, the processing ends with the LwM2M client 104 deregistering from the LwM2M server 106. In step 210, the LwM2M client 104 transmits a de-register message to the LwM2M server and, in step 212, the LwM2M server responds to confirm that the registration of the LwM2M client 104 has been deleted. Alternatively, the LwM2M client 104 may effectively de-register by not transmitting a Register or Update message to the LwM2M server 106 for the configured period of time, at which point the registration is considered terminated.

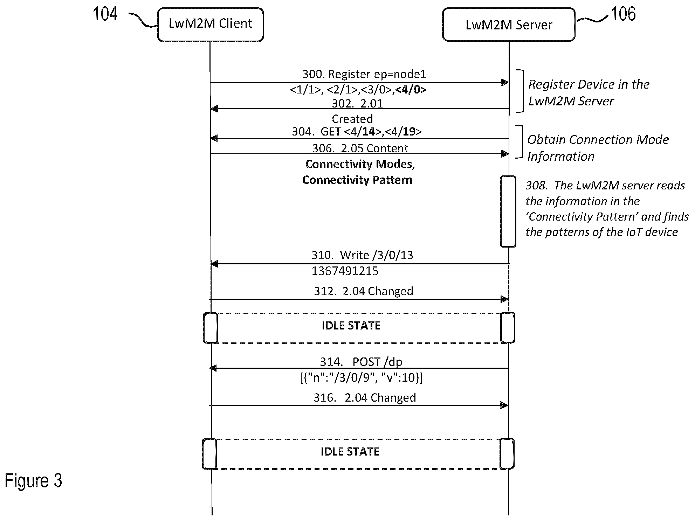

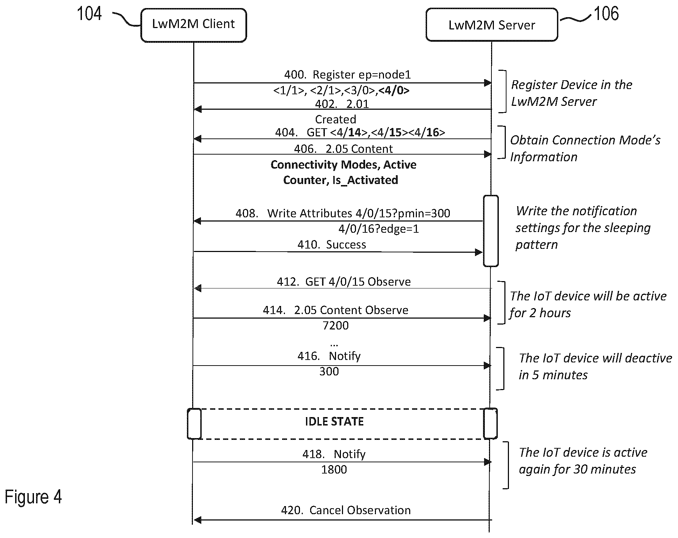

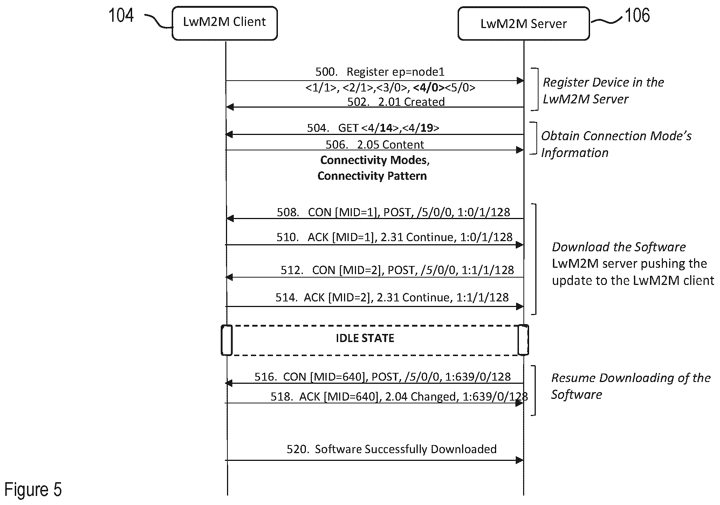

Figure 2 thus shows high-level processing of embodiments of the disclosure, according to which a LwM2M server 106 can be informed of one or more periods of time in which a LwM2M client 104 will enter a sleep state (e.g., in which it is uncontactable by the LwM2M server). The embodiments also enable communication between the LwM2M server and the LwM2M client to recommence after the LwM2M client has left the sleep state without a further registration process, saving time and resources that would otherwise be consumed. Figures 3 and 4 are sequence diagrams providing further detail where the LwM2M client enters the sleep state in a predictable fashion and an unpredictable fashion, respectively. Figure 5 is a sequence diagram illustrating embodiments of the disclosure as applied when the LwM2M server is providing a software package to the LwM2M client over multiple transmissions.

As noted above, Figure 3 is a sequence diagram for sharing connectivity information according to embodiments of the disclosure, particularly where the LwM2M client device enters a sleep state predictably. The sequence may involve a LwM2M client 104 and a LwM2M server 106 as described above with respect to Figure 1.

In a first series of steps, the LwM2M client 104 registers with the LwM2M server 106. Thus steps 300 and 302 correspond to steps 200 and 202 described above with respect to Figure 2. As with Figure 2, in the illustrated embodiment, the LwM2M client 104 supports object IDs 1, 2, 3 and 4, which correspond to the LwM2M Server, Access Control, Device, and Connectivity Monitoring objects respectively. The Connectivity Monitoring object is augmented with the resources as set out in Table 1 above.

In a second series of steps, the LwM2M server 106 obtains an indication of a time period in which the LwM2M client 104 will enter the sleep state. In step 304, the LwM2M server 106 transmits a "GET" message to the LwM2M client 104, requesting that the LwM2M client 104 report certain information to the LwM2M server 106. In particular, the LwM2M server 106 requests information from object ID 4 (Connectivity Monitoring) maintained by the LwM2M client, and the values stored in resource IDs 14 and 19 (Connectivity Modes and Connectivity Pattern respectively). In step 306, the LwM2M client 106 transmits a response message comprising indications of the information contained in those resources.

The information in resource ID 14 lets the LwM2M server 106 know whether the LwM2M client 104 supports a sleep state. If this indication is negative, the LwM2M server 106 learns that the LwM2M client 104 does not support a sleep state mode of operation, and thus the processing with respect to sleep states can stop at that point. In the illustrated embodiment, the indication is positive and thus the processing with respect to sleep states can proceed.

In step 308, the LwM2M server 106 reads the information in the response message, learning that the LwM2M client 104 supports at least one sleep state (e.g., from resource ID 14), and that the LwM2M client 104 will enter the sleep state in a predictable manner (e.g., from the presence of information in resource ID 19). The LwM2M server 106 also learns the conditions that will cause the LwM2M client to enter the sleep state. The illustrated embodiment describes these conditions as a "pattern"; however, it will be clear from the description above that the conditions may additionally or alternatively relate to events that cause the LwM2M client 104 to enter the sleep state.

In a third series of steps, the LwM2M server 106 and the LwM2M client 104 communicate with each other to perform one or more loT tasks. In the illustrated embodiment, the LwM2M server 106 transmits in step 310 a Write message to the LwM2M client 104. The Write message instructs the LwM2M client 104 to write certain values to a LwM2M object maintained in the LwM2M client. In the illustrated embodiment, the Write message instructs the LwM2M client to write the value 1367491215 to resource ID 13 ("Current Time") in the object ID 3 ("Device"). Thus the LwM2M server 106 changes the current time in the LwM2M client 104, for example, to synchronize the two devices. In step 312, the LwM2M client 104 transmits a response message to confirm that the value has been changed.

After the third series of steps, the LwM2M client 104 enters the sleep state (or "idle state" as written in Figure 3). The LwM2M server 106 is able to predict this, based on the information obtained in steps 304 and 306, and thus refrains from transmitting to the LwM2M client 104 during this time. The LwM2M server 106 also maintains all registration settings of the LwM2M client 104 while the latter entity is in the sleep state.

Once the time period concludes and the LwM2M client 104 enters the active state, communication between the LwM2M client 104 and the LwM2M server 106 can recommence. According to embodiments of the disclosure, as all the registration settings have been maintained by the LwM2M server 106, communication can recommence without a further registration procedure. Thus, in a fourth series of steps, the LwM2M server 106 and the LwM2M client 104 communicate with each other to perform one or more further loT tasks. In the illustrated embodiment, the LwM2M server 106 transmits in step 314 a POST message to the LwM2M client 104, pushing data to the LwM2M client 104 (and in particular the Device object ID 3). In step 316, the LwM2M client 104 transmits a response message to confirm that the value has been changed.

After the fourth series of steps, the LwM2M client 104 again enters the sleep state (or "idle state" as written in Figure 3). The LwM2M server 106 is able to predict this, based on the information obtained in steps 304 and 306, and again refrains from transmitting to the LwM2M client 104 during this time.

Those skilled in the art that the Write and Post messages described in steps 310 and 314 are provided merely as examples of possible loT actions that might be performed by the LwM2M server and the LwM2M client (and paused during periods in which the LwM2M client 104 is in the sleep state).

Figure 4 is a sequence diagram for sharing connectivity information according to embodiments of the disclosure, particularly where the LwM2M device enters a sleep state unpredictably. The sequence may involve a LwM2M client 104 and a LwM2M server 106 as described above with respect to Figure 1.

In a first series of steps, the LwM2M client 104 registers with the LwM2M server 106. Steps 400 and 402 therefore correspond to steps 200 and 202 described above with respect to Figure 2. As with Figure 2, in the illustrated embodiment, the LwM2M client 104 supports object IDs 1, 2, 3 and 4, which correspond to the LwM2M Server, Access Control, Device, and Connectivity Monitoring objects respectively. The Connectivity Monitoring object is augmented with the resources as set out in Table 1 above.

In a second series of steps, the LwM2M server 106 obtains an indication of a time period in which the LwM2M client 104 will enter the sleep state. In step 404, the LwM2M server 106 transmits a "GET" message to the LwM2M client 104, requesting that the LwM2M client 104 report certain information to the LwM2M server 106. In particular, the LwM2M server 106 requests information from object ID 4 (Connectivity Monitoring) maintained by the LwM2M client, and the values stored in resource IDs 14, 15 and 16 (Connectivity Modes, Active Counter, and Is_Activated respectively). In step 406, the LwM2M client 106 transmits a response message comprising indications of the information contained in those resources.

The information in resource ID 14 lets the LwM2M server 106 know whether the LwM2M client 104 supports a sleep state. If this indication is negative, the LwM2M server 106 learns that the LwM2M client 104 does not support a sleep state mode of operation, and thus the processing with respect to sleep states can stop at that point. In the illustrated embodiment, the indication is positive and thus the processing with respect to sleep states can proceed.

The LwM2M client 104 is in the active state, thus the indication in resource ID 16 is positive, and resource ID 15 indicates the amount of time until the LwM2M client 104 enters the sleep state. This information is particularly useful where the LwM2M client 104 may enter the sleep state unpredictably (from the LwM2M server's perspective).

In a third series of steps, the LwM2M server 106 configures the LwM2M client 104 to perform certain actions so that the LwM2M server 106 is notified of the LwM2M client 104 entering and leaving the sleep state. In step 408, the LwM2M server 106 transmits a configuration (e.g., Write Attributes) message to the LwM2M client 104.

In particular, the configuration message configures the LwM2M client 104 to notify the LwM2M server 106 when the amount of time until the LwM2M client 104 enters the sleep state falls below a threshold. In the illustrated embodiment, this is shown in the coding "4/0/15?pmin=300". Thus, the LwM2M client 104 is configured to notify the LwM2M server 106 when the value in resource ID 15 of object 4 (the Active Counter) is at or below the value 300 (which represents five minutes where the Active Counter counts in units of seconds).

Additionally, the configuration message configures the LwM2M client 104 to notify the LwM2M server 106 when the connection state of the LwM2M client 104 changes from the sleep state to the active state. In the illustrated embodiment, this is shown in the coding "4/0/16?edge=1". Thus, the LwM2M client 104 is configured to notify the LwM2M server 106 when the value in resource ID 16 of object 4 (Is_Activated) changes from 0 to 1, i.e., when the LwM2M client 104 transitions from the sleep state to the active state.

In step 410, the LwM2M client 104 transmits a response message to the LwM2M server 106 to confirm that the configuration has been successfully implemented.

In a fourth series of steps, the LwM2M server 106 and the LwM2M client 104 communicate with each other to perform one or more loT tasks. In particular, as the LwM2M client 104 may enter the sleep state unpredictably from the LwM2M server's perspective, prior to performing the one or more loT tasks the LwM2M server 106 checks the amount of time until the LwM2M client 104 will enter the sleep state. In this way, the LwM2M server 106 can determine whether there is sufficient time to perform the tasks before the LwM2M client enters the sleep state, for example.

Thus, in step 412, the LwM2M server 106 transmits a GET message to the LwM2M client 104, requesting that the LwM2M client 104 report the amount of time until the LwM2M client enters the sleep state. This is shown in the coding "GET 4/0/15 Observe", which means that the LwM2M server is requesting information concerning the value in resource ID 15 of object 4 (Active counter). In step 414, the LwM2M client 104 responds with an indication of the current value in that resource field, which is 7200 in the illustrated embodiment (i.e., the LwM2M client will be active for the next two hours, where the Active Counter units are in seconds).

Some time later, in step 416, the LwM2M client notifies the LwM2M server 106 that it will enter the sleep state shortly, in accordance with the configuration message received in step 408. Thus, the value in resource ID 15 has reached or fallen below the configured threshold value (300 seconds), and the LwM2M client 104 transmits a notification message to the LwM2M server 106 comprising an indication of this fact. The notification message may comprise an indication of the current amount of time until the LwM2M client 104 enters the sleep state (particularly where the current amount of time is different to the configured threshold, for example).

Thus, the LwM2M server 106 is notified of a time period in which the LwM2M client 104 will enter the sleep state, and can pause current activities with the LwM2M client or otherwise refrain from transmitting to the LwM2M client during that time period. As with previous embodiments, the LwM2M server 106 may also maintain the registration of the LwM2M client while the client is in the sleep state, so that an additional registration procedure is not required once the LwM2M client enters the active state.

Once the LwM2M client 104 returns to the active state, in step 418 it notifies the LwM2M server 106 that it is now in the active state, in accordance with the configuration message received in step 408. Thus, the value in resource ID 16 has changed to the configured value (1), meaning that the LwM2M client is in the active state, and the LwM2M client 104 transmits a notification message to the LwM2M server 106 comprising an indication of this fact. In one embodiment, the notification message additionally comprises an indication of the amount of time until the LwM2M client 104 enters the sleep state again. In the illustrated embodiment, for example, the notification message comprises the value "1800", indicating that the LwM2M client 104 will be in the active state for thirty minutes.

Thus, the LwM2M server 106 is notified that the LwM2M client 104 has returned to the active state, and can resume or recommence activities with the LwM2M client, including transmitting messages to the LwM2M client 104 or receiving messages from the LwM2M client 104. As the LwM2M server 106 maintained the registration of the LwM2M client while the client was in the sleep state, no additional registration procedure is required once the LwM2M client enters the active state.

In the illustrated embodiment, in step 420, the LwM2M server 106 cancels the observation configured in step 412.

Figure 4 illustrates a sequence where the LwM2M client 104 enters the sleep state in a manner which is unpredictable to the LwM2M server 106, whereas Figure 3 illustrates a sequence where the LwM2M client 104 enters the sleep state in a manner which is predictable to the LwM2M server 106. In the former case, the LwM2M server 106 determines the time period in which the LwM2M client will enter the sleep state by interrogating resource IDs 15 and 16 (see step 404); in the latter case, the LwM2M server 106 determines the time period in which the LwM2M client will enter the sleep state by interrogating resource ID 19 (see step 304). According to the illustrated embodiments, it might appear that the LwM2M server has foreknowledge of whether the LwM2M client will enter the sleep state unpredictably or predictably (and so interrogate only resource IDs 15 and 16 in the former case and resource ID 19 in the latter case). According to embodiments of the disclosure, the LwM2M server 106 may alternatively interrogate all relevant resource IDs, and determine from the returned values whether the LwM2M client will enter the sleep state unpredictably or predictably, or both. For example, in steps 304 and 404, the LwM2M server 106 may interrogate resource IDs 14, 15, 16 and 19. Depending on the values which are returned by the LwM2M client 104, the server is able to determine whether the LwM2M client will enter the sleep state unpredictably or predictably, or both. The absence of resource ID 19 (or, correspondingly, null values in resource ID 19) may comprise an indication that the LwM2M client 104 does not have predictable conditions which cause it to enter the sleep state. The absence of resource ID 15 (or, correspondingly, null values in resource ID 15) may comprise an indication that the LwM2M client 104 does not have unpredictable conditions which cause it to enter the sleep state.

Thus, embodiments of the disclosure provide methods for sharing connectivity information of a LwM2M client, such that a LwM2M server can take account of periods of time in which the LwM2M client enters a sleep state. While the LwM2M client is in the sleep state, the LwM2M server may refrain from transmitting to the LwM2M client, and may maintain a registration of the LwM2M client. In this way, additional registration procedures that would otherwise be required after a LwM2M client reconnects from the sleep state can be avoided, having the advantage of saving time and resources in both the LwM2M client and the LwM2M server.

Figure 5 is a sequence diagram for transmitting a software package according to embodiments of the disclosure. The sequence may involve a LwM2M client 104 and a LwM2M server 106 as described above with respect to Figure 1.

In the example of Figure 5, the LwM2M client enters the sleep state in a manner which is predictable to the LwM2M server 106. Thus, in a first series of steps 500 to 506, the LwM2M client 104 registers with the LwM2M server 106 and provides an indication of the conditions which will cause it to enter the sleep state. These steps may be similar to steps 300 to 306, described above with respect to Figure 3. Thus, the LwM2M server 106 receives an indication of a period of time in which the LwM2M client 104 will enter the sleep state. Note also that the LwM2M client in Figure 5 supports object ID 5, which corresponds to the Firmware Update object, i.e., the LwM2M client supports the transmission of software packages such as for firmware updates.

In a second series of steps, the LwM2M server 106 transfers a software package (e.g., a software update) to the LwM2M client 104 using a plurality of messages. Specifically, as noted above, the transfer of large software packages using LwM2M is difficult as typically the transport block size of LwM2M is set to a value which is far smaller than the total size of the software package. Thus, the transfer of a software package can require the transmission of multiple blocks of data in separate transmissions. Conventionally, if communication between the LwM2M server and the LwM2M client becomes disrupted (e.g., by the LwM2M client entering a sleep state), the registration of the LwM2M client is terminated and transfer of the software package must restart from the beginning once the LwM2M client re-registers with the LwM2M server.

Thus, in step 508, the LwM2M server transmits, to the LwM2M client 104, a first message comprising a first block of a software package to be transferred. The first message comprises an index (CON [MID=1]) identifying it as the first of a plurality of such messages comprising different blocks of the software package. The LwM2M client 104 acknowledges receipt of the first message in step 510, by transmitting an acknowledgement message to the LwM2M server 106. Note that the acknowledgement message comprises the indication "Continue", indicating that the LwM2M client 104 expects further messages corresponding to other parts of the software package.

Steps 508 and 510 may be repeated for further messages (see steps 512 and 514) transferring further blocks of the software package. For brevity, only the second message is shown in Figure 5 (CON [MID=2]).

At some time, the LwM2M client 104 enters the sleep state. This time period is known to the LwM2M server 106 through steps 504 and 506, and therefore the LwM2M server 106 can temporarily halt transmission of further blocks of data to the LwM2M client for the duration of the time period and can also maintain the registration of the LwM2M client. The LwM2M server 106 may also record an indication of which data blocks of the software package are yet to be successfully transferred to the LwM2M client 104. For example, where the blocks are transmitted in a defined sequence, the LwM2M server may record a note of the last data block which was successfully transmitted; all data blocks which follow that data block in the sequence remain to be transmitted. Alternatively, the LwM2M server 106 may record a note of the identities of all data blocks which are yet to be transmitted or, equivalently, the identities of all data blocks which have been successfully transmitted (with the remainder yet to be transmitted). The skilled person will recognize that there are various equivalent methods for recording this indication without departing from the scope of the claims appended hereto.

Once the time period ends and the LwM2M client re-enters the active state, transmission of the remaining data blocks can resume. Note that no additional registration procedure is required as the LwM2M server maintains the registration of the LwM2M client while the client is in the sleep state. Thus, in step 516, the LwM2M server 106 transmits a further data block of the software package to the LwM2M client 104. The illustrated embodiment shows the transmission of only the final data block (CON [MID=640]), but any number of further data blocks may be transmitted after the end of the time period. Further, the LwM2M client 104 may enter the sleep state more than once during transmission of the software package. In step 518, the LwM2M client 104 acknowledges receipt of the final data block. In step 520, the LwM2M client 104 confirms that the software package (e.g., a firmware update) has been successfully received in its entirety.

The particular example shown in Figure 5 uses embodiments in which the LwM2M client 104 enters the sleep state in a manner which is predictable to the LwM2M server 106 (e.g., through use of the "Connectivity Pattern" resource). Those skilled in the art will appreciate that the principles disclosed with respect to Figure 5 could equally be applied where the LwM2M client 104 enters the sleep state in a manner which is unpredictable to the LwM2M server 106. In this instance, the LwM2M server 106 may apply the steps set out with respect to Figure 4 to determine the time period(s) where the LwM2M client 104 will enter the sleep state, so that transmission of the software package messages can also be paused in that case.

The processing of Figure 5 shows the transfer of a software package to a LwM2M client through push notifications. The LwM2M server 106 pushes blocks of data to the LwM2M client 104 and these are acknowledged. The LwM2M specification also provides for the transfer of software packages through a fetching process. In this case, the LwM2M client 104 may be provided with a universal resource indicator (URI) by the LwM2M server (using a configured Package URI resource) and fetches the software package from the indicated server.

Thus, according to the embodiment shown in Figure 5, the transmission of a software package can be paused when the LwM2M client enters the sleep state and resumed or recommenced once the LwM2M client leaves the sleep state, without requiring the process to restart from the beginning. Again, time and resources are saved in both the LwM2M client or device and the LwM2M server.

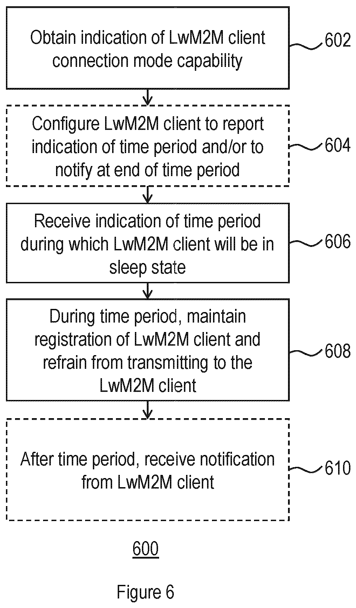

Figure 6 is a flowchart of a method 600 in a LwM2M server according to embodiments of the disclosure. In some embodiments, the steps shown in Figure 6 correspond to the signalling of the LwM2M server 106 in Figures 2 to 5.

The method begins in step 602, in which the LwM2M server obtains an indication of a connection mode capability of a LwM2M client, and particularly whether the LwM2M client supports multiple connection modes including a sleep state in which one or more software or hardware components of the LwM2M client are activated in the sleep state. For example, while in the sleep state, the LwM2M client may deactivate one or more components (e.g., radio circuitry, wired or optical transmission circuitry, etc) enabling it to communicate with the LwM2M server. This step may correspond in some respects to steps 304, 404 and 504, particularly where the LwM2M server interrogates an object maintained by the LwM2M client to determine the value of the resource Connectivity Modes.

In some embodiments, the method proceeds to step 604, in which the LwM2M server configures the LwM2M client to report an indication of a time period in which the LwM2M client will enter the sleep state, and/or to notify the LwM2M server once the time period ends and the LwM2M client leaves the sleep state. This step may be particularly useful when the LwM2M client enters the sleep state in a manner which is unpredictable to the LwM2M server, and may correspond to step 408 described above. Thus, for example, the LwM2M server may configure the LwM2M client to notify the LwM2M server once the LwM2M client is about to enter the sleep state (e.g., is within a threshold period of entering the sleep state). The LwM2M server may additionally or alternatively configure the LwM2M client to notify the server once it leaves the sleep state (e.g., enters the active state). If the LwM2M client will not enter the sleep state unpredictably, step 604 may be omitted.

In step 606, the LwM2M server receives an indication of a time period in which the LwM2M client will enter the sleep state. The indication may comprise an amount of time until the LwM2M client will enter the sleep state (thus implicitly indicating a start time of the time period), in which case step 606 may correspond in part to any of steps 404, 414 or 418, for example. In such embodiments, the end of the time period may be notified to the LwM2M server, e.g., as set out above in step 416.

Alternatively or additionally, the indication may comprise an indication of one or more conditions upon fulfilment of which the LwM2M client will enter the sleep state. For example, the conditions may comprise a temporal pattern according to which the LwM2M client enters the sleep state, i.e., a regular pattern according to which the LwM2M client enters the sleep state over time. The temporal pattern may be periodic, such that the LwM2M client enters the sleep state for a defined period of time on a regular cycle. In this case, the indication may comprise one or more of: an indication of a period of the pattern; an indication of the duration of the time that the LwM2M client will be in the sleep state; and an indication of a time at which the pattern starts. The conditions may additionally or alternatively define one or more events that cause the LwM2M client to enter the sleep state. The events may relate to the physical environment of the LwM2M client or the system in which the LwM2M client is present. In this regard, the LwM2M client may be configured to enter the sleep state upon some change in the physical environment which affects the operation of the LwM2M client. For example, the LwM2M device may comprise a sensor configured to sense a parameter of the physical environment, with those measurements becoming invalid upon a change in the physical environment, e.g., upon a fire alarm being activated, or upon a window being opened. In the embodiment shown in Table 1, this indication is contained in a new resource ID 19, "Connectivity Pattern".

In step 608, during the time period, the LwM2M server maintains the registration of the LwM2M client and refrains from transmitting to the LwM2M client. For example, the LwM2M server may maintain all registration information for the LwM2M client during the time period.

After the time period, for example where the LwM2M client enters the sleep state in an unpredictable manner, the method may proceed to step 610 in which the LwM2M server receives an indication from the LwM2M client that the LwM2M client has left the sleep state, and/or entered an active state.

In some embodiments, the LwM2M server may be configured to transfer, to the LwM2M client, a data package split into a plurality of data blocks. In such embodiments, the method further comprises: transmitting one or more first transmissions to the LwM2M client prior to the time period in which the LwM2M client enters the sleep state. Each of the first transmissions comprises one or more first data blocks of the plurality of data blocks. During the time period, in step 608, the LwM2M server may store an indication of one or more second data blocks of the plurality of data blocks which are yet to be transmitted to the LwM2M client. Upon conclusion of the time period, the LwM2M server may transmit one or more second transmissions to the LwM2M client, each comprising one or more of the one or more second data blocks.

The LwM2M server may interact with the LwM2M client to determine the connectivity information through interrogating one or more objects maintained by the LwM2M client. In such examples, the LwM2M client may maintain a LwM2M object storing one or more of: an indication of whether or not the LwM2M client supports multiple connectivity modes, including the sleep state; an indication of an amount of time until the LwM2M client enters the sleep state; an indication of whether or not the LwM2M client is in the sleep state; an indication of one or more pieces of hardware in the LwM2M device that are active during the sleep state; an indication of one or more pieces of software in the LwM2M device that are active during the sleep state; and an indication of one or more conditions upon fulfilment of which the LwM2M client enters the sleep state. Further details are provided with respect to Table 1 and its description.

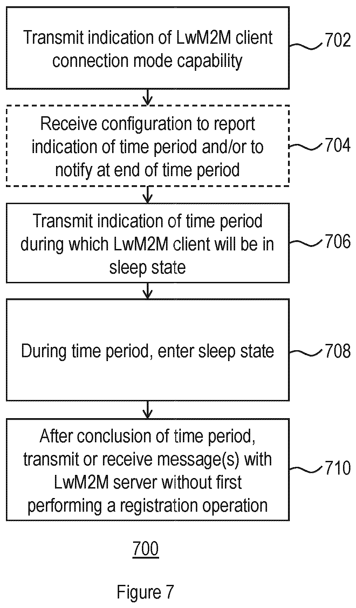

Figure 7 is a flowchart of a method 700 in a LwM2M device according to embodiments of the disclosure. In some embodiments, the steps shown in Figure 7 correspond to the signalling of the LwM2M client 104 in Figures 2 to 5.

The method begins in step 702, in which the LwM2M client transmits, to a LwM2M server, an indication of a connection mode capability of a LwM2M client, and particularly whether the LwM2M client supports multiple connection modes including a sleep state in which one or more software or hardware components of the LwM2M client are deactivated. For example, while in the sleep state, the LwM2M client may deactivate one or more components enabling it to communicate with the LwM2M server (e.g., radio circuitry, wired or optical transmission circuitry, etc). This step may correspond in some respects to steps 304, 404 and 504, particularly where the LwM2M server interrogates an object maintained by the LwM2M client to determine the value of the resource Connectivity Modes.

In some embodiments, the method proceeds to step 704, in which the LwM2M client receives, from the LwM2M server, a configuration to report an indication of a time period in which the LwM2M client will enter the sleep state, and/or to notify the LwM2M server once the time period ends and the LwM2M client leaves the sleep state. This step may be particularly useful where the LwM2M client enters the sleep state in a manner which is unpredictable to the LwM2M server, and may correspond to step 408 described above. Thus, for example, the LwM2M client may be configured to notify the LwM2M server once the LwM2M client is about to enter the sleep state (e.g., is within a threshold period of entering the sleep state). The LwM2M client may additionally or alternatively be configured to notify the server once it leaves the sleep state (e.g., enters the active state). If the LwM2M client will not enter the sleep state unpredictably, step 704 may be omitted.

In step 706, the LwM2M client transmits an indication of a time period in which the LwM2M client will enter the sleep state. The indication may comprise an amount of time until the LwM2M client will enter the sleep state (thus implicitly indicating a start time of the time period), in which case step 706 may correspond in part to any of steps 404, 414 or 418, for example. In such embodiments, the end of the time period may be notified to the LwM2M server, e.g., as set out above in step 416.

Alternatively or additionally, the indication may comprise an indication of one or more conditions upon fulfilment of which the LwM2M client will enter the sleep state. For example, the conditions may comprise a temporal pattern according to which the LwM2M client enters the sleep state, i.e., a regular pattern according to which the LwM2M client enters the sleep state over time. The temporal pattern may be periodic, such that the LwM2M client enters the sleep state for a defined period of time on a regular cycle. In this case, the indication may comprise one or more of: an indication of a period of the pattern; an indication of the duration of the time that the LwM2M client will be in the sleep state; and an indication of a time at which the pattern starts. The conditions may additionally or alternatively define one or more events that cause the LwM2M client to enter the sleep state. The events may relate to the physical environment of the LwM2M client or the system in which the LwM2M client is present. In this regard, the LwM2M client may be configured to enter the sleep state upon some change in the physical environment which affects the operation of the LwM2M client. For example, the LwM2M device may comprise a sensor configured to sense a parameter of the physical environment, with those measurements becoming invalid upon a change in the physical environment, e.g., upon a fire alarm being activated, or upon a window being opened. In the embodiment shown in Table 1, this indication is contained in a new resource ID 19, "Connectivity Pattern".

In step 708, during the time period, the LwM2M client enters the sleep state.

After conclusion of the time period, in step 710, the LwM2M client leaves the sleep state (transitions to an active state), and transmits a message to the LwM2M server or receives a message from the LwM2M server without performing a further registration procedure. That is, as the LwM2M server has maintained the registration of the LwM2M client while it was in the sleep state, no further registration is necessary. For example, the LwM2M client may transmit a notification message to the LwM2M server comprising an indication that it has left the sleep state (entered the active state). Alternatively, the LwM2M client may receive one or more transmissions of data blocks belonging to a software package (e.g., as described above with respect to Figure 5).

The LwM2M server may interact with the LwM2M client to determine the connectivity information through interrogating one or more objects maintained by the LwM2M client. In such examples, the LwM2M client may maintain a LwM2M object storing one or more of: an indication of whether or not the LwM2M client supports multiple connectivity modes, including the sleep state; an indication of an amount of time until the LwM2M client enters the sleep state; an indication of whether or not the LwM2M client is in the sleep state; an indication of one or more pieces of hardware in the LwM2M device that are active during the sleep state; an indication of one or more pieces of software in the LwM2M device that are active during the sleep state; and an indication of one or more conditions upon fulfilment of which the LwM2M client enters the sleep state. Further details are provided with respect to Table 1 and its description.

Embodiments of the disclosure thus provide methods for sharing connectivity information of an LwM2M client, such that a LwM2M server can take account of periods of time in which the LwM2M client enters a sleep state. While the LwM2M client is in the sleep state, the LwM2M server may refrain from transmitting to the LwM2M client, and may maintain a registration of the LwM2M client. In particular embodiments of the disclosure, the transmission of a software package can be paused when the LwM2M client enters the sleep state and resumed or recommenced once the LwM2M client leaves the sleep state, without requiring the process to restart from the beginning.

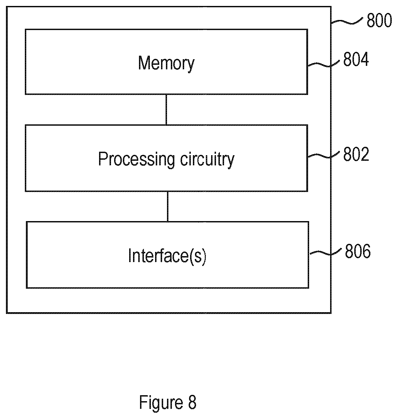

Figure 8 is a schematic diagram of an apparatus 800 according to embodiments of the disclosure, for implementing a LwM2M server.

The apparatus 800 may comprise any suitable apparatus such as, for example, a physical server, a computing device, a communication network component or a cloud computing infrastructure.

The apparatus 800 may be operable to carry out the example method 600 described with reference to Figure 6, the signalling of the LwM2M server 106 in any of Figures 2 to 5, and possibly any other processes or methods disclosed herein. It is also to be understood that the method 600 of Figure 6 may not necessarily be carried out solely by the apparatus 800. At least some operations of the method can be performed by one or more other entities.

The apparatus 800 comprises processing circuitry 802 (such as one or more processors, digital signal processors, general purpose processing units, etc), a machine-readable medium 804 (e.g., memory such as read-only memory (ROM), random-access memory, cache memory, flash memory devices, optical storage devices, etc) and one or more interfaces 806.

In one embodiment, the machine-readable medium 804 contains (e.g. stores) instructions which are executable by the processor such that the apparatus is operable to: receive, from a LwM2M client registered with the LwM2M server, an indication of a time period during which the LwM2M client will be in a sleep state in which one or more hardware or software components of a LwM2M device implementing the LwM2M client are deactivated; and, during the time period, maintaining a registration of the LwM2M client with the LwM2M server; and refraining from transmitting to the LwM2M client.

Thus, the machine-readable medium may store instructions which, when executed by the processing circuitry 802, cause the apparatus 800 to perform the steps described above.

In other embodiments, the processing circuitry 802 may be configured to directly perform the method, or to cause the apparatus 800 to perform the method, without executing instructions stored in the non-transitory machine-readable medium 804, e.g., through suitably configured dedicated circuitry.

The one or more interfaces 806 may comprise hardware and/or software suitable for communicating with other nodes of the communication network using any suitable communication medium. For example, the interfaces 806 may comprise one or more wired interfaces, using optical or electrical transmission media. Such interfaces may therefore utilize optical or electrical transmitters and receivers, as well as the necessary software to encode and decode signals transmitted via the interface. In a further example, the interfaces 806 may comprise one or more wireless interfaces. Such interfaces may therefore utilize one or more antennas, baseband circuitry, etc. The components are illustrated coupled together in series; however, those skilled in the art will appreciate that the components may be coupled together in any suitable manner (e.g., via a system bus or suchlike).

In further embodiments of the disclosure, the apparatus 800 may comprise power circuitry (not illustrated). The power circuitry may comprise, or be coupled to, power management circuitry and is configured to supply the components of apparatus 800 with power for performing the functionality described herein. Power circuitry may receive power from a power source. The power source and/or power circuitry may be configured to provide power to the various components of apparatus 800 in a form suitable for the respective components (e.g., at a voltage and current level needed for each respective component). The power source may either be included in, or external to, the power circuitry and/or the apparatus 800. For example, the apparatus 800 may be connectable to an external power source (e.g., an electricity outlet) via an input circuitry or interface such as an electrical cable, whereby the external power source supplies power to the power circuitry. As a further example, the power source may comprise a source of power in the form of a battery or battery pack which is connected to, or integrated in, the power circuitry. The battery may provide backup power should the external power source fail. Other types of power sources, such as photovoltaic devices, may also be used.

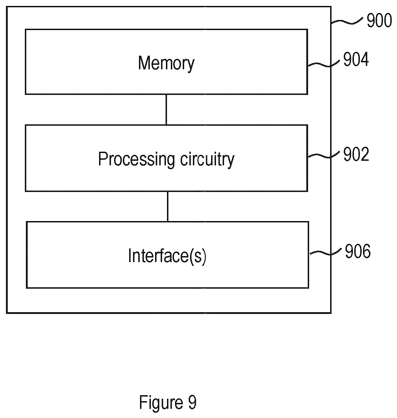

Figure 9 is a schematic diagram of an apparatus 900 according to embodiments of the disclosure, for implementing a LwM2M client.

The apparatus 900 may comprise any suitable apparatus such as, for example, a computing device or other computing architecture or physical computing entity that operates a LwM2M client.

The apparatus 900 may be operable to carry out the example method 700 described with reference to Figure 7, the signalling of the LwM2M client 104 in any of Figures 2 to 5, and possibly any other processes or methods disclosed herein. It is also to be understood that the method 700 of Figure 7 may not necessarily be carried out solely by the apparatus 900. At least some operations of the method can be performed by one or more other entities.

The apparatus 900 comprises processing circuitry 902 (such as one or more processors, digital signal processors, general purpose processing units, etc), a machine-readable medium 904 (e.g., memory such as read-only memory (ROM), random-access memory, cache memory, flash memory devices, optical storage devices, etc) and one or more interfaces 906.

In one embodiment, the machine-readable medium 904 contains (e.g. stores) instructions which are executable by the processor such that the apparatus is operable to: transmit, to a LwM2M server with which the LwM2M client is registered, an indication of a time period during which the LwM2M client will enter a sleep state in which one or more hardware or software components of the LwM2M device are deactivated; and, after conclusion of the time period: transmitting a message to or receiving a message from the LwM2M server without first performing a registration operation with the LwM2M server.

Thus, the machine-readable medium may store instructions which, when executed by the processing circuitry 902, cause the apparatus 900 to perform the steps described above.

In other embodiments, the processing circuitry 902 may be configured to directly perform the method, or to cause the apparatus 900 to perform the method, without executing instructions stored in the non-transitory machine-readable medium 904, e.g., through suitably configured dedicated circuitry.

The one or more interfaces 906 may comprise hardware and/or software suitable for communicating with other nodes of the communication network using any suitable communication medium. For example, the interfaces 906 may comprise one or more wired interfaces, using optical or electrical transmission media. Such interfaces may therefore utilize optical or electrical transmitters and receivers, as well as the necessary software to encode and decode signals transmitted via the interface. In a further example, the interfaces 906 may comprise one or more wireless interfaces. Such interfaces may therefore utilize one or more antennas, baseband circuitry, etc. The components are illustrated coupled together in series; however, those skilled in the art will appreciate that the components may be coupled together in any suitable manner (e.g., via a system bus or suchlike).

In further embodiments of the disclosure, the apparatus 900 may comprise power circuitry (not illustrated). The power circuitry may comprise, or be coupled to, power management circuitry and is configured to supply the components of apparatus 900 with power for performing the functionality described herein. Power circuitry may receive power from a power source. The power source and/or power circuitry may be configured to provide power to the various components of apparatus 900 in a form suitable for the respective components (e.g., at a voltage and current level needed for each respective component). The power source may either be included in, or external to, the power circuitry and/or the apparatus 900. For example, the apparatus 900 may be connectable to an external power source (e.g., an electricity outlet) via an input circuitry or interface such as an electrical cable, whereby the external power source supplies power to the power circuitry. As a further example, the power source may comprise a source of power in the form of a battery or battery pack which is connected to, or integrated in, the power circuitry. The battery may provide backup power should the external power source fail. Other types of power sources, such as photovoltaic devices, may also be used.

It should be noted that the above-mentioned examples illustrate rather than limit the invention, and that those skilled in the art will be able to design many alternative examples without departing from the scope of the appended statements. The word "comprising" does not exclude the presence of elements or steps other than those listed in a claim, "a" or "an" does not exclude a plurality, and a single processor or other unit may fulfil the functions of several units recited in the statements below. Where the terms, "first", "second" etc. are used they are to be understood merely as labels for the convenient identification of a particular feature. In particular, they are not to be interpreted as describing the first or the second feature of a plurality of such features (i.e., the first or second of such features to occur in time or space) unless explicitly stated otherwise. Steps in the methods disclosed herein may be carried out in any order unless expressly otherwise stated. Any reference signs in the statements shall not be construed so as to limit their scope.

## Claims

1. A method performed by a lightweight machine-to-machine, LwM2M, server (106, 800), the method comprising:
- receiving (306, 406, 416, 506, 606), from a LwM2M client (104, 900) registered with the LwM2M server, an indication of a time period, during which the LwM2M client will be in a sleep state in which one or more hardware or software components of a LwM2M device implementing the LwM2M client are deactivated; and
- for the duration of the time period (608):
∘maintaining a registration of the LwM2M client with the LwM2M server; and
∘ refraining from transmitting to the LwM2M client.

2. The method according to claim 1, wherein the indication comprises an indication of an amount of time until the LwM2M client enters the sleep state and wherein the method further comprises configuring (408, 604) the LwM2M client to transmit the indication of the time period upon the amount of time until the LwM2M client enters the sleep state reaching or falling below a threshold value.

3. The method according to claim 2, further comprising, upon conclusion of the time period, receiving (418, 610) a notification from the LwM2M client that the LwM2M client has transitioned from the sleep state to an active state in which the one or more hardware or software components of the LwM2M device are activated, and further comprising configuring (408, 604) the LwM2M client to transmit the notification upon the LwM2M client transitioning from the sleep state to the active state.

4. The method according to claim 1, wherein the indication comprises an indication of one or more conditions upon fulfilment of which the LwM2M client will enter the sleep state, wherein the one or more conditions comprise a temporal pattern according to which the LwM2M client will be in the sleep state, wherein the temporal pattern comprises a periodic cycle according to which the LwM2M client will be in the sleep state, and wherein the indication of one or more conditions comprises indications of one or more of: a period of the periodic cycle; a duration of the time period in the periodic cycle; and a time at which the time period begins.

5. The method according to claim 4, wherein the one or more conditions comprise one or more events that cause the LwM2M client to enter the sleep state, and wherein the indication of one or more conditions comprises an indication of a duration of the time period in which the LwM2M client will be in the sleep state.

6. The method according to any one of the preceding claims, wherein the LwM2M server maintains all registration information for the LwM2M client during the time period.

7. The method according to any one of the preceding claims, wherein the LwM2M server is configured to transfer, to the LwM2M client, a data package split into a plurality of data blocks, the method further comprising:
- transmitting (508, 512) one or more first transmissions to the LwM2M client, each of the first transmissions comprising one or more first data blocks of the plurality of data blocks;
- upon the LwM2M client entering the sleep state, storing an indication of one or more second data blocks of the plurality of data blocks which are yet to be transmitted to the LwM2M client; and
- upon conclusion of the time period, transmitting (516) one or more second transmissions to the LwM2M client, each of the second transmissions comprising one or more of the one or more second data blocks.

8. The method according to any one of the preceding claims, wherein the LwM2M client maintains a LwM2M object storing one or more of: an indication of whether or not the LwM2M client supports multiple connectivity modes, including the sleep state; an indication of an amount of time until the LwM2M client enters the sleep state; an indication of whether or not the LwM2M client is in the sleep state; an indication of one or more pieces of hardware in the LwM2M device that are active during the sleep state; an indication of one or more pieces of software in the LwM2M device that are active during the sleep state; and an indication of one or more conditions upon fulfilment of which the LwM2M client enters the sleep state.

9. A method performed by a lightweight machine-to-machine, LwM2M, device (102 900) implementing a LwM2M client (104), the method comprising:
- transmitting (706), to a LwM2M server (106, 800) with which the LwM2M client is registered, an indication of a time period during which the LwM2M client will enter a sleep state in which one or more hardware or software components of the LwM2M device are deactivated; and
- after conclusion of the time period (710):
∘ transmitting (210, 418) a message to or receiving (314, 516) a message from the LwM2M server without first performing a registration operation with the LwM2M server.

10. The method according to claim 9, wherein the indication comprises an indication of an amount of time until the LwM2M client enters the sleep state and wherein the method further comprises receiving (408, 704) a configuration from the LwM2M server to transmit the indication of the time period upon the amount of time until the LwM2M client enters the sleep state reaching or falling below a threshold value.

11. The method according to claim 10, further comprising, upon conclusion of the time period, transmitting (418) a notification to the LwM2M server that the LwM2M client has transitioned from the sleep state to an active state in which the one or more hardware or software components of the LwM2M device are activated, and further comprising receiving (408, 704) a configuration from the LwM2M server to transmit the notification upon the LwM2M client transitioning from the sleep state to the active state.

12. The method according to claim 9, wherein the indication comprises an indication of one or more conditions upon fulfilment of which the LwM2M client will enter the sleep state, wherein the one or more conditions comprise a temporal pattern according to which the LwM2M client will be in the sleep state, wherein the temporal pattern comprises a periodic cycle according to which the LwM2M client will be in the sleep state, and wherein the indication of one or more conditions comprises indications of one or more of: a period of the periodic cycle; a duration of the time period in the periodic cycle; and a time at which the time period begins.

13. The method according to claim 12, wherein the one or more conditions comprise one or more events that cause the LwM2M client to enter the sleep state, and wherein the indication of one or more conditions comprises an indication of a duration of the time period in which the LwM2M client will be in the sleep state.

14. The method according to any one of claims 9 to 13, wherein the LwM2M client is configured to receive, from the LwM2M server, a data package split into a plurality of data blocks, the method further comprising:
- receiving (508, 512) one or more first transmissions from the LwM2M server, each of the first transmissions comprising one or more first data blocks of the plurality of data blocks; and
- upon conclusion of the time period, receiving (516) one or more second transmissions from the LwM2M server, each of the second transmissions comprising one or more second data blocks of the plurality of data blocks not transmitted to the LwM2M client prior to the time period.

15. The method according to any one of claims 9 to 14, wherein the LwM2M client maintains a LwM2M object storing one or more of: an indication of whether or not the LwM2M client supports multiple connectivity modes, including the sleep state; an indication of an amount of time until the LwM2M client enters the sleep state; an indication of whether or not the LwM2M client is in the sleep state; an indication of one or more pieces of hardware in the LwM2M device that are active during the sleep state; an indication of one or more pieces of software in the LwM2M device that are active during the sleep state; and an indication of one or more conditions upon fulfilment of which the LwM2M client enters the sleep state.

16. An LwM2M server (800) comprising processing circuitry (802) and a non-transitory machine-readable medium (804) storing instructions which, when executed by the processing circuitry, cause the LwM2M server to:
- receive, from a LwM2M client registered with the LwM2M server, an indication of a time period during which the LwM2M client will be in a sleep state in which one or more hardware or software components of a LwM2M device implementing the LwM2M client are deactivated; and
- for the duration of the time period:
∘ maintain a registration of the LwM2M client with the LwM2M server; and
∘ refrain from transmitting to the LwM2M client.

17. An LwM2M device (900) implementing a LwM2M client (104) comprising processing circuitry (902) configured to cause the LwM2M device to:
- transmit, to a LwM2M server with which the LwM2M client is registered, an indication of a time period during which the LwM2M client will enter a sleep state in which one or more hardware or software components of the LwM2M device are deactivated; and
- after conclusion of the time period:
∘ transmit a message to or receiving a message from the LwM2M server without first performing a registration operation with the LwM2M server.

## Patentansprüche

1. Verfahren, das von einem Lightweight Machine-to-Machine-Server, LwM2M-Server, (106, 800) durchgeführt wird, wobei das Verfahren Folgendes umfasst:
- Empfangen (306, 406, 416, 506, 606) von einem LwM2M-Client (104, 900), der am LwM2M-Server registriert ist, einer Angabe eines Zeitraums, während dessen der LwM2M-Client in einem Schlafzustand sein wird, in dem eine oder mehrere Hardware- oder Softwarekomponenten einer LwM2M-Vorrichtung, die den LwM2M-Client implementiert, deaktiviert sind; und
- für die Dauer des Zeitraums (608):
∘ Verwalten einer Registrierung des LwM2M-Clients am LwM2M-Server; und
∘ Unterlassen des Sendens an den LwM2M-Client.

2. Verfahren nach Anspruch 1, wobei die Angabe eine Angabe einer Zeitspanne umfasst, bis der LwM2M-Client in den Schlafzustand eintritt, und wobei das Verfahren ferner Konfigurieren (408, 604) des LwM2M-Clients umfasst, die Angabe des Zeitraums zu senden, sobald die Zeitspanne bis zum Eintritt des LwM2M-Clients in den Schlafzustand einen Schwellenwert erreicht oder unterschreitet.

3. Verfahren nach Anspruch 2, ferner umfassend nach Ablauf des Zeitraums Empfangen (418, 610) einer Benachrichtigung von dem LwM2M-Client, dass der LwM2M-Client vom Schlafzustand in einen aktiven Zustand übergegangen ist, in dem die eine oder die mehreren Hardware- oder Softwarekomponenten der LwM2M-Vorrichtung aktiviert sind, und ferner umfassend Konfigurieren (408, 604) des LwM2M-Clients, die Benachrichtigung zu senden, sobald der LwM2M-Client vom Schlafzustand in den aktiven Zustand übergeht.

4. Verfahren nach Anspruch 1, wobei die Angabe eine Angabe einer oder mehrerer Bedingungen umfasst, bei deren Erfüllung der LwM2M-Client in den Schlafzustand eintritt, wobei die eine oder die mehreren Bedingungen ein zeitliches Muster umfassen, gemäß dem der LwM2M-Client im Schlafzustand sein wird, wobei das zeitliche Muster einen periodischen Zyklus umfasst, gemäß dem der LwM2M-Client im Schlafzustand sein wird, und wobei die Angabe einer oder mehrerer Bedingungen Angaben eines oder mehrerer von Folgenden umfasst; eine Periode des periodischen Zyklus; eine Dauer des Zeitraums in dem periodischen Zyklus und einen Zeitpunkt, zu dem der Zeitraum beginnt.

5. Verfahren nach Anspruch 4, wobei die eine oder die mehreren Bedingungen ein oder mehrere Ereignisse umfassen, die den LwM2M-Client veranlassen, in den Schlafzustand einzutreten, und wobei die Angabe einer oder mehrerer Bedingungen eine Angabe einer Dauer des Zeitraums umfassen, in dem der LwM2M-Client im Schlafzustand sein wird.

6. Verfahren nach einem der vorhergehenden Ansprüche, wobei der LwM2M-Server alle Registrierungsinformationen für den LwM2M-Client während des Zeitraums verwaltet.

7. Verfahren nach einem der vorhergehenden Ansprüche, wobei der LwM2M-Server dazu konfiguriert ist, ein Datenpaket, das in eine Mehrzahl von Datenblöcken geteilt ist, an den LwM2M-Client zu übertragen, wobei das Verfahren ferner Folgendes umfasst:
- Senden (508, 512) einer oder mehrerer erster Übertragungen an den LwM2M-Client, wobei jede der ersten Übertragungen einen oder mehrere erste Datenblöcke der Mehrzahl von Datenblöcken umfasst;
- nach Eintritt des LwM2M-Clients in den Schlafzustand Speichern einer Angabe eines oder mehrerer zweiter Datenblöcke der Mehrzahl von Datenblöcken, die noch an den LwM2M-Client zu senden sind; und
- nach Ablauf des Zeitraums Senden (516) einer oder mehrerer zweiter Übertragungen an den LwM2M-Client, wobei jede der zweiten Übertragungen einen oder mehrere des einen oder der mehreren zweiten Datenblöcke umfasst.

8. Verfahren nach einem der vorhergehenden Ansprüche, wobei der LwM2M-Client ein LwM2M-Objekt verwaltet, das eines oder mehrere von Folgenden speichert: eine Angabe dessen, ob der LwM2M-Client mehrere Konnektivitätsmodi, einschließlich des Schlafzustands, unterstützt oder nicht; eine Angabe einer Zeitspanne, bis der LwM2M-Client in den Schlafzustand eintritt; eine Angabe dessen, ob der LwM2M-Client im Schlafzustand ist oder nicht; eine Angabe eines oder mehrerer Hardwareelemente in der LwM2M-Vorrichtung, die während des Schlafzustands aktiv sind; eine Angabe eines oder mehrerer Softwareelemente in der LwM2M-Vorrichtung, die während des Schlafzustands aktiv sind; und eine Angabe einer oder mehrerer Bedingungen, bei deren Erfüllung der LwM2M-Client in den Schlafzustand eintritt.

9. Verfahren, das von einer Lightweight Machine-to-Machine-Vorrichtung, LwM2M-Vorrichtung, (102, 900) durchgeführt wird, die einen LwM2M-Client (104) implementiert, wobei das Verfahren Folgendes umfasst:
- Senden (706) an einen LwM2M-Server (106, 800), an dem der LwM2M-Client registriert ist, einer Angabe eines Zeitraums, während dessen der LwM2M-Client in einen Schlafzustand eintreten wird, in dem eine oder mehrere Hardware- oder Softwarekomponenten einer LwM2M-Vorrichtung deaktiviert sind; und
- nach Ablauf des Zeitraums (710):
∘ Senden (210, 418) einer Nachricht an den oder Empfangen (314, 516) einer Nachricht von dem LwM2M-Server, ohne zuerst eine Registrierungsoperation am LwM2M-Server durchzuführen.

10. Verfahren nach Anspruch 9, wobei die Angabe eine Angabe einer Zeitspanne umfasst, bis der LwM2M-Client in den Schlafzustand eintritt, und wobei das Verfahren ferner Empfangen (408, 704) einer Konfiguration vom LwM2M-Server umfasst, die Angabe des Zeitraums zu senden, sobald die Zeitspanne bis zum Eintritt des LwM2M-Clients in den Schlafzustand einen Schwellenwert erreicht oder unterschreitet.

11. Verfahren nach Anspruch 10, ferner umfassend nach Ablauf des Zeitraums Senden (418) einer Benachrichtigung an den LwM2M-Server, dass der LwM2M-Client vom Schlafzustand in einen aktiven Zustand übergegangen ist, in dem die eine oder die mehreren Hardware- oder Softwarekomponenten der LwM2M-Vorrichtung aktiviert sind, und ferner umfassend Empfangen (408, 704) einer Konfiguration von dem LwM2M-Server, die Benachrichtigung zu senden, sobald der LwM2M-Client vom Schlafzustand in den aktiven Zustand übergeht.

12. Verfahren nach Anspruch 9, wobei die Angabe eine Angabe einer oder mehrerer Bedingungen umfasst, bei deren Erfüllung der LwM2M-Client in den Schlafzustand eintritt, wobei die eine oder die mehreren Bedingungen ein zeitliches Muster umfassen, gemäß dem der LwM2M-Client im Schlafzustand sein wird, wobei das zeitliche Muster einen periodischen Zyklus umfasst, gemäß dem der LwM2M-Client im Schlafzustand sein wird, und wobei die Angabe einer oder mehrerer Bedingungen Angaben eines oder mehrerer von Folgenden umfasst; eine Periode des periodischen Zyklus; eine Dauer des Zeitraums in dem periodischen Zyklus und einen Zeitpunkt, zu dem der Zeitraum beginnt.

13. Verfahren nach Anspruch 12, wobei die eine oder die mehreren Bedingungen ein oder mehrere Ereignisse umfassen, die den LwM2M-Client veranlassen, in den Schlafzustand einzutreten, und wobei die Angabe einer oder mehrerer Bedingungen eine Angabe einer Dauer des Zeitraums umfasst, in dem der LwM2M-Client im Schlafzustand sein wird.

14. Verfahren nach einem der Ansprüche 9 bis 13, wobei der LwM2M-Client dazu konfiguriert ist, ein Datenpaket, das in eine Mehrzahl von Datenblöcken geteilt ist, vom LwM2M-Server zu empfangen, wobei das Verfahren ferner Folgendes umfasst:
- Empfangen (508, 512) einer oder mehrerer erster Übertragungen vom LwM2M-Server, wobei jede der ersten Übertragungen einen oder mehrere erste Datenblöcke der Mehrzahl von Datenblöcken umfasst; und
- nach Ablauf des Zeitraums Empfangen (516) einer oder mehrerer zweiter Übertragungen vom LwM2M-Server, wobei jede der zweiten Übertragungen einen oder mehrere zweite Datenblöcke der Mehrzahl von Datenblöcken umfasst, die vor dem Zeitraum nicht an den LwM2M-Client gesendet wurden.

15. Verfahren nach einem der Ansprüche 9 bis 14, wobei der LwM2M-Client ein LwM2M-Objekt verwaltet, das eines oder mehrere von Folgenden speichert: eine Angabe dessen, ob der LwM2M-Client mehrere Konnektivitätsmodi, einschließlich des Schlafzustands, unterstützt oder nicht; eine Angabe einer Zeitspanne, bis der LwM2M-Client in den Schlafzustand eintritt; eine Angabe dessen, ob der LwM2M-Client im Schlafzustand ist oder nicht; eine Angabe eines oder mehrerer Hardwareelemente in der LwM2M-Vorrichtung, die während des Schlafzustands aktiv sind; eine Angabe eines oder mehrerer Softwareelemente in der LwM2M-Vorrichtung, die während des Schlafzustands aktiv sind; und eine Angabe einer oder mehrerer Bedingungen, bei deren Erfüllung der LwM2M-Client in den Schlafzustand eintritt.

16. LwM2M-Server (800), umfassend Verarbeitungsschaltungsanordnung (802) und ein nichttransitorisches maschinenlesbares Medium (804), das Anweisungen speichert, die bei Ausführung durch die Verarbeitungsschaltungsanordnung den LwM2M-Server zu Folgendem veranlassen:
- Empfangen von einem LwM2M-Client, der am LwM2M-Server registriert ist, einer Angabe eines Zeitraums, während dessen der LwM2M-Client in einem Schlafzustand sein wird, in dem eine oder mehrere Hardware- oder Softwarekomponenten einer LwM2M-Vorrichtung, die den LwM2M-Client implementiert, deaktiviert sind; und
- für die Dauer des Zeitraums:
∘ Verwalten einer Registrierung des LwM2M-Clients am LwM2M-Server; und
∘ Unterlassen des Sendens an den LwM2M-Client.

17. LwM2M-Vorrichtung (900), die einen LwM2M-Client (104) implementiert und Verarbeitungsschaltungsanordnung (902) umfasst, die dazu konfiguriert ist, die LwM2M-Vorrichtung zu Folgendem zu veranlassen:
- Senden an einen LwM2M-Server, an dem der LwM2M-Client registriert ist, einer Angabe eines Zeitraums, während dessen der LwM2M-Client in einen Schlafzustand eintreten wird, in dem eine oder mehrere Hardware- oder Softwarekomponenten einer LwM2M-Vorrichtung deaktiviert sind; und
- nach Ablauf des Zeitraums:
∘Senden einer Nachricht an den oder Empfangen einer Nachricht von dem LwM2M-Server, ohne zuerst eine Registrierungsoperation am LwM2M-Server durchzuführen.

## Revendications

1. Procédé réalisé par un serveur lightweight machine-to-machine, LwM2M, (106, 800), le procédé comprenant :
- la réception (306, 406, 416, 506, 606), depuis un client LwM2M (104, 900) enregistré auprès du serveur LwM2M, d'une indication d'une période de temps au cours de laquelle le client LwM2M sera dans un état de sommeil dans lequel un ou plusieurs composants matériels ou logiciels d'un dispositif LwM2M mettant en œuvre le client LwM2M sont désactivés ; et
- pendant la durée de la période de temps (608) :
∘ le maintien d'un enregistrement du client LwM2M auprès du serveur LwM2M ; et
∘ l'abstention de transmettre au client LwM2M.

2. Procédé selon la revendication 1, dans lequel l'indication comprend une indication d'une quantité de temps jusqu'à ce que le client LwM2M entre dans l'état de sommeil et dans lequel le procédé comprend en outre la configuration (408, 604) du client LwM2M pour transmettre l'indication de la période de temps lorsque la quantité de temps jusqu'à ce que le client LwM2M entre dans l'état de sommeil devient inférieure ou égale à une valeur seuil.

3. Procédé selon la revendication 2, comprenant en outre, à la fin de la période de temps, la réception (418, 610) d'une notification depuis le client LwM2M que le client LwM2M est passé de l'état de sommeil à un état actif dans lequel les un ou plusieurs composants matériels ou logiciels du dispositif LwM2M sont activés, et comprenant en outre la configuration (408, 604) du client LwM2M pour transmettre la notification lorsque le client LwM2M passe de l'état de sommeil à l'état actif.

4. Procédé selon la revendication 1, dans lequel l'indication comprend une indication d'une ou plusieurs conditions qui, lorsqu'elles sont remplies, amènent le client LwM2M à entrer dans l'état de sommeil, dans lequel les une ou plusieurs conditions comprennent un motif temporel selon lequel le client LwM2M sera dans l'état de sommeil, dans lequel le motif temporel comprend un cycle périodique selon lequel le client LwM2M sera dans l'état de sommeil, et dans lequel l'indication d'une ou plusieurs conditions comprend des indications d'un ou plusieurs parmi : une période du cycle périodique ; une durée de la période de temps dans le cycle périodique ; et un temps auquel la période de temps commence.

5. Procédé selon la revendication 4, dans lequel les une ou plusieurs conditions comprennent un ou plusieurs événements qui amènent le client LwM2M à entrer dans l'état de sommeil, et dans lequel l'indication d'une ou plusieurs conditions comprend une indication d'une durée de la période de temps au cours de laquelle le client LwM2M sera dans l'état de sommeil.

6. Procédé selon l'une quelconque des revendications précédentes, dans lequel le serveur LwM2M maintient toutes les informations d'enregistrement pour le client LwM2M au cours de la période de temps.

7. Procédé selon l'une quelconque des revendications précédentes, dans lequel le serveur LwM2M est configuré pour transférer, au client LwM2M, un ensemble de données séparé en une pluralité de blocs de données, le procédé comprenant en outre :
- la transmission (508, 512) d'une ou plusieurs premières transmissions au client LwM2M, chacune des premières transmissions comprenant un ou plusieurs premiers blocs de données de la pluralité de blocs de données ;
- lorsque le client LwM2M entre dans l'état de sommeil, le stockage d'une indication d'un ou plusieurs deuxièmes blocs de données de la pluralité de blocs de données qui n'ont pas encore été transmis au client LwM2M ; et
- à la fin de la période de temps, la transmission (516) d'une ou plusieurs deuxièmes transmissions au client LwM2M, chacune des deuxièmes transmissions comprenant un ou plusieurs des un ou plusieurs deuxièmes blocs de données.

8. Procédé selon l'une quelconque des revendications précédentes, dans lequel le client LwM2M maintient un objet LwM2M stockant une ou plusieurs parmi : une indication indiquant si le client LwM2M prend ou non en charge de multiples modes de connectivité, y compris l'état de sommeil ; une indication d'une quantité de temps jusqu'à ce que le client LwM2M entre dans l'état de sommeil ; une indication indiquant si le client LwM2M se trouve ou non dans l'état de sommeil ; une indication d'un ou plusieurs éléments matériels dans le dispositif LwM2M qui sont actifs pendant l'état de sommeil ; une indication d'un ou plusieurs éléments logiciels dans le dispositif LwM2M qui sont actifs pendant l'état de sommeil ; et une indication d'une ou plusieurs conditions qui, lorsqu'elles sont remplies, amènent le client LwM2M à entrer dans l'état de sommeil.

9. Procédé réalisé par un dispositif lightweight machine-to-machine, LwM2M, (102, 900) mettant en œuvre un client LwM2M (104), le procédé comprenant :
- la transmission (706), à un serveur LwM2M (106, 800) auprès duquel le client LwM2M est enregistré, d'une indication d'une période de temps au cours de laquelle le client LwM2M entrera dans un état de sommeil dans lequel un ou plusieurs composants matériels ou logiciels d'un dispositif LwM2M sont désactivés ; et
- après la fin de la période de temps (710) :
∘ la transmission (210, 418) d'un message au ou la réception (314, 516) d'un message depuis le serveur LwM2M sans réaliser au préalable une opération d'enregistrement auprès du serveur LwM2M.

10. Procédé selon la revendication 9, dans lequel l'indication comprend une indication d'une quantité de temps jusqu'à ce que le client LwM2M entre dans l'état de sommeil et dans lequel le procédé comprend en outre la réception (408, 704) d'une configuration, depuis le serveur LwM2M, pour transmettre l'indication de la période de temps lorsque la quantité de temps jusqu'à ce que le client LwM2M entre dans l'état de sommeil devient inférieure ou égale à une valeur seuil.

11. Procédé selon la revendication 10, comprenant en outre, à la fin de la période de temps, la transmission (418) d'une notification au serveur LwM2M que le client LwM2M est passé de l'état de sommeil à un état actif dans lequel les un ou plusieurs composants matériels ou logiciels du dispositif LwM2M sont activés, et comprenant en outre la réception (408, 704) d'une configuration depuis le serveur LwM2M pour transmettre la notification lorsque le client LwM2M passe de l'état de sommeil à l'état actif.

12. Procédé selon la revendication 9, dans lequel l'indication comprend une indication d'une ou plusieurs conditions qui, lorsqu'elles sont remplies, amènent le client LwM2M à entrer dans l'état de sommeil, dans lequel les une ou plusieurs conditions comprennent un motif temporel selon lequel le client LwM2M sera dans l'état de sommeil, dans lequel le motif temporel comprend un cycle périodique selon lequel le client LwM2M sera dans l'état de sommeil, et dans lequel l'indication d'une ou plusieurs conditions comprend des indications d'un ou plusieurs parmi : une période du cycle périodique ; une durée de la période de temps dans le cycle périodique ; et un temps auquel la période de temps commence.

13. Procédé selon la revendication 12, dans lequel les une ou plusieurs conditions comprennent un ou plusieurs événements qui amènent le client LwM2M à entrer dans l'état de sommeil, et dans lequel l'indication d'une ou plusieurs conditions comprend une indication d'une durée de la période de temps au cours de laquelle le client LwM2M sera dans l'état de sommeil.

14. Procédé selon l'une quelconque des revendications 9 à 13, dans lequel le client LwM2M est configuré pour recevoir, depuis le serveur LwM2M, un ensemble de données séparé en une pluralité de blocs de données, le procédé comprenant en outre :
- la réception (508, 512) d'une ou plusieurs premières transmissions depuis le serveur LwM2M, chacune des premières transmissions comprenant un ou plusieurs premiers blocs de données de la pluralité de blocs de données ; et
- à la fin de la période de temps, la réception (516) d'une ou plusieurs deuxièmes transmissions depuis le serveur LwM2M, chacune des deuxièmes transmissions comprenant un ou plusieurs deuxièmes blocs de données de la pluralité de blocs de données qui ne sont pas transmis au client LwM2M avant la période de temps.

15. Procédé selon l'une quelconque des revendications 9 à 14, dans lequel le client LwM2M maintient un objet LwM2M stockant une ou plusieurs parmi : une indication indiquant si le client LwM2M prend ou non en charge de multiples modes de connectivité, y compris l'état de sommeil ; une indication d'une quantité de temps jusqu'à ce que le client LwM2M entre dans l'état de sommeil ; une indication indiquant si le client LwM2M se trouve ou non dans l'état de sommeil ; une indication d'un ou plusieurs éléments matériels dans le dispositif LwM2M qui sont actifs pendant l'état de sommeil ; une indication d'un ou plusieurs éléments logiciels dans le dispositif LwM2M qui sont actifs pendant l'état de sommeil ; et une indication d'une ou plusieurs conditions qui, lorsqu'elles sont remplies, amènent le client LwM2M à entrer dans l'état de sommeil.

16. Serveur LwM2M (800) comprenant une circuiterie de traitement (802) et un support non transitoire lisible par machine (804) stockant des instructions qui, lorsqu'elles sont exécutées par la circuiterie de traitement, amènent le serveur LwM2M à :
- recevoir, depuis un client LwM2M enregistré auprès du serveur LwM2M, une indication d'une période de temps au cours de laquelle le client LwM2M sera dans un état de sommeil dans lequel un ou plusieurs composants matériels ou logiciels d'un dispositif LwM2M mettant en œuvre le client LwM2M sont désactivés ; et
- pendant la durée de la période de temps :
∘ maintenir un enregistrement du client LwM2M auprès du serveur LwM2M ; et
∘ s'abstenir de transmettre au client LwM2M.

17. Dispositif LwM2M (900) mettant en œuvre un client LwM2M (104) comprenant une circuiterie de traitement (902) configurée pour amener le dispositif LwM2M à :
- transmettre, à un serveur LwM2M auprès duquel le client LwM2M est enregistré, une indication d'une période de temps au cours de laquelle le client LwM2M entrera dans un état de sommeil dans lequel un ou plusieurs composants matériels ou logiciels d'un dispositif LwM2M sont désactivés ; et
- après la fin de la période de temps :
∘ transmettre un message au ou recevoir un message depuis le serveur LwM2M sans réaliser au préalable une opération d'enregistrement auprès du serveur LwM2M.
